# FASCICULE DE BREVET EUROPEEN

(11) **EP 1 953 364 B1**
(45) Date de publication et mention de la délivrance du brevet: **07.10.2009**
(21) Numéro de dépôt: 08100795.7
(22) Date de dépôt: 23.01.2008
(51) Int. Cl.: F02C 7/277, F01D 25/18

(54) **Moteur à turbine à gaz incorporant un démarreur monté sur la boîte à engrenages**
Gasturbinentriebwerk mit einer auf einem Getriebegehäuse montierten Anlassvorrichtung
Gas turbine engine with a starter mounted on the gear unit

(30) Priorité: 30.01.2007 FR 0700641
(43) Date de publication de la demande: 06.08.2008
(73) Titulaire: HISPANO SUIZA, 92700 Colombes (FR)
(72) Inventeur: AVILA, Chloé, 92160, ANTONY (FR); CHARBONNEL, Jean- Louis, 77310, BOISSISE LE ROI (FR); DARDENNE, Marie- Lise, 77370, FONTENAILLES (FR); FOLLONIER, Corinne, 77310, BOISSISE LE ROI (FR); MOUTON, Pierre, 91350, GRIGNY (FR)
(74) Mandataire: David, Daniel

(56) Documents cités:
- EP-A- 1 698 762
- EP-A1- 0 270 444
- GB-A- 2 144 804
- US-A1- 2005 139 019

## Description

La présente invention concerne le domaine des moteurs à turbine à gaz et en particulier des turboréacteurs. Elle vise plus particulièrement la lubrification de démarreur à air monté sur la boîte à engrenages de transmission de puissance.

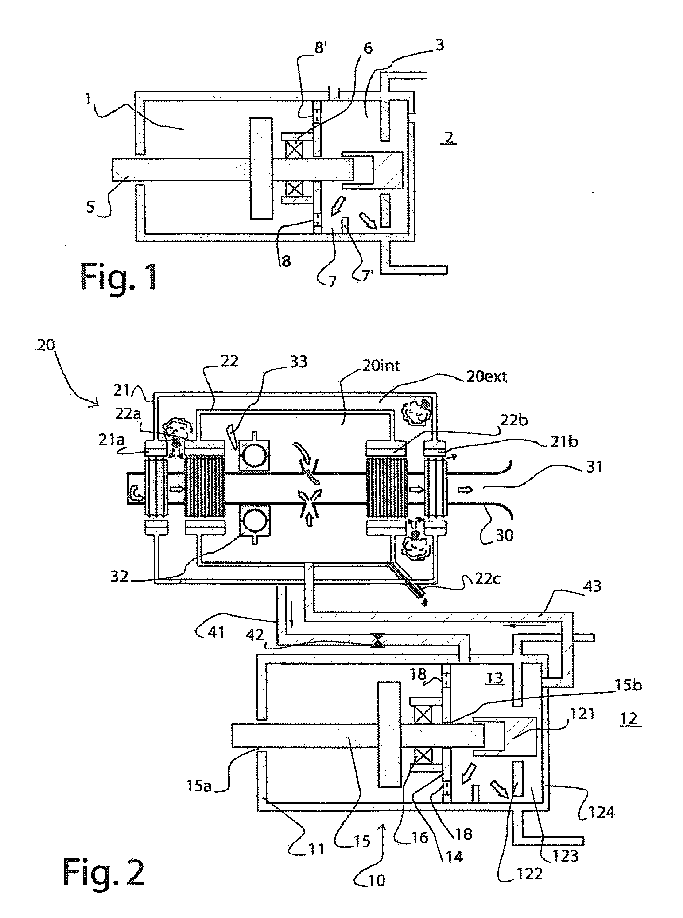

Un turboréacteur comprend un boîtier fixé sur le carter extérieur et dans lequel sont logés des pignons reliés mécaniquement à un arbre du moteur pour leur entraînement. Eux-mêmes sont raccordés à des machines pu des moteurs auxiliaires telles que des pompes ou des générateurs électriques servant le moteur. En particulier ce boîtier supporte le démarreur qui au moment du démarrage au sol notamment entraîne mécaniquement l'arbre du moteur, celui du rotor haute pression dans un moteur multi-corps. Le boîtier est communément désigné AGB qui est l'acronyme des termes « Auxiliary Gear Box ». La lubrification des pièces tournantes à l'intérieur du carter du démarreur est assurée généralement par de l'huile prélevée depuis le boîtier AGB. La figure 1 illustre de façon schématique un mode de lubrification du démarreur tel que mis en oeuvre sur certains turboréacteurs. Un démarreur 1 est monté sur le boîtier AGB 2. Une cavité formant interface 3 est ménagée entre la paroi 4 du carter et la paroi du boîtier AGB 2. L'arbre 5 du démarreur avec son ensemble de pignons est supporté dans le carter du démarreur par un palier 6. Sur la gauche de la figure 1 et non représenté, l'arbre 5 est relié à la turbine à air pour son entraînement au démarrage du moteur. Un joint de turbine 5A assure l'étanchéité de l'arbre 5 qui traverse à cet endroit le carter.

L'huile de lubrification des pièces tournantes du démarreur est envoyée depuis le boîtier 2, dans un réceptacle 7 situé dans l'interface 3 entre le démarreur et le boîtier AGB et qui est solidaire du démarreur. Ce réceptacle 7 communique par une ouverture 8, ménagée dans la paroi 4 du carter du démarreur, avec l'enceinte de ce dernier. L'ouverture est protégée par une crépine pour éviter la projection de débris dans la cavité du démarreur. L'huile recueillie dans la partie inférieure de l'enceinte à huile du démarreur est mise en circulation à travers les pièces tournantes du démarreur par barbotage, pompage ou autre moyen non représenté. Il n'y a pas de circulation d'huile entre l'enceinte du démarreur et celle du boîtier 2. Le niveau est défini par un déversoir 7' du réceptacle 7 de l'interface 3. L'équilibrage des pressions entre les deux enceintes, celle du démarreur et celle de l'AGB, est assuré par une ouverture 8' ménagée dans la partie supérieure de la paroi 4. Par ce Principe des vases communicants, on associe la surveillance du niveau d'huile du démarreur à la surveillance en temps réel du circuit d'huile moteur. On évite aussi à la fois l'engorgement du démarreur et le risque de contamination du moteur par de l'huile provenant du démarreur.

L'huile contenue dans l'enceinte du démarreur peut fuir accidentellement vers l'extérieur pour différentes raisons. Le joint 5a entre l'arbre de la turbine à air et le carter du démarreur peut avoir été endommagé par exemple, un bouchon d'huile peut n'être plus étanche ou encore une fissure dans le carter peut être apparue. Si un tel événement survient, la fuite n'a pas de conséquence sur la lubrification du démarreur par apport d'huile depuis le boîtier AGB au travers de la crépine. Cependant la pression régnant dans les enceintes étant supérieure à la pression atmosphérique, l'air chargé de brouillard d'huile provenant du boîtier AGB est expulsé vers l'extérieur. Cette alimentation est alors perçue comme une fuite d'huile de lubrification du moteur et est indiquée au pilote. La fuite peut entraîner la vidange du circuit de l'huile de lubrification du moteur et donc un arrêt moteur en vol (IFSD).

Un moteur à turbine à gaz selon l'art antérieur est connu dans le document EP 1 698 762.

Une solution connue par le brevet US 6681579 consiste à contrôler le flux de fluide entre le boîtier AGB et l'enceinte du démarreur. Une plaque d'étanchéité est montée sur le démarreur du côté de la zone formant interface entre le démarreur et le boîtier de façon à pouvoir isoler l'enceinte du démarreur lorsque la pression à l'intérieur de celle-ci chute. Une soupape reste ouverte en fonctionnement normal pour que l'équilibre des pressions soit assuré. Cette soupape se ferme automatiquement en cas de chute de pression.

L'invention a pour objectif de rendre, par un moyen différent de la solution précédente, l'ensemble propulsif plus tolérant à une fuite d'huile à travers le démarreur.

Conformément à l'invention le moteur à turbine à gaz comprenant un boîtier à engrenages relié mécaniquement à un arbre du moteur pour l'entraînement de machines auxiliaires et un démarreur à turbine à air monté sur le boîtier, les enceintes du démarreur et du boîtier étant en communication de telle façon que l'huile de lubrification du démarreur soit distribuée depuis le boîtier AGB, est caractérisé par le fait que l'enceinte huile du démarreur est pressurisée par une source d'air, indépendante du boîtier AGB.

Par la solution de l'invention, une fuite d'huile ou d'air chargé de brouillard d'huile au niveau du démarreur n'est pas compensée par de l'air chargé d'huile provenant du boîtier à engrenages. Le risque de vidange du circuit de lubrification du moteur est alors plus faible.

Par ailleurs on rend l'ensemble propulsif plus tolérant à une fuite d'huile à travers le démarreur en forçant la circulation de l'air huilé provenant de l'AGB vers un retour à pression ambiante. La pressurisation par de l'air non huilé a pour objectif de faire barrière à toute fuite d'huile de l'enceinte du démarreur.

Conformément à un premier mode de réalisation, l'air de pressurisation débouche dans une zone interface entre le carter du démarreur et celui du boîtier. Ainsi l'air de pressurisation forme barrière à l'air susceptible de circuler depuis le boîtier à engrenage. Dans la mesure où cet air de pressurisation n'est pas lui-même chargé d'un brouillard d'huile alors la fuite sera constituée essentiellement d'air, et l'huile ne sera pas entraînée avec cet air de fuite.

Conformément à un autre mode de réalisation, un joint double d'étanchéité de l'arbre, avec un joint interne et un joint externe, étant ménagé du démarreur du côté de la turbine à air, l'air de pressurisation débouche entre les deux joints d'étanchéité. Selon ce mode de réalisation, l'air de pressurisation fuit du côté du joint interne vers l'intérieur de l'enceinte du démarreur qu'il balaie avant éventuellement de déboucher dans la zone interface entre le démarreur et le carter du boîtier.

De préférence un retour d'air est ménagé entre le démarreur et le boîtier qui est à une pression inférieure à la pression d'alimentation en air de pressurisation. Cette disposition permet le raccordement avantageusement à un déshuileur qui va assurer la récupération de l'huile formant le brouillard d'huile entraîné avec le flux d'air.

Conformément à un mode de réalisation avantageux, l'air de pressurisation est prélevé depuis une enceinte extérieure de pressurisation de l'un des paliers du turboréacteur. Dans la mesure où le boîtier à engrenages se situe vers l'avant du moteur, il est souhaitable que ce soit le premier ou le deuxième palier de support d'arbre du turboréacteur. Dans ce cas le retour d'air est acheminé de préférence vers l'enceinte intérieure du palier du turboréacteur.

On décrit maintenant deux modes de réalisation non limitatifs de l'invention en référence aux dessins annexés sur lesquels
La figure 1 montre de façon schématique le mode de lubrification d'un démarreur à air de turboréacteur lorsqu'il est monte sur le boîtier AGB de ce dernier,
La figure 2 montre un circuit de pressurisation de l'enceinte huile d'un démarreur à air monté sur un boîtier AGB conforme à l'invention,
La figure 3 montre une variante de réalisation de pressurisation.

En se reportant à la figure 2, on voit de façon schématique un exemple d'aménagement conforme à un premier mode de réalisation de l'invention.

Le démarreur 10 comprend un carter 11 formant une enceinte pour l'huile de lubrification des pièces tournantes du démarreur 10, que l'on a représenté sous la forme d'un ensemble tournant ou arbre 15 monté à rotation dans le carter 11 par un palier 16. Il faut comprendre qu'à cet ensemble tournant sont associés les pignons, réducteurs, fusibles et autres pièces constituant le démarreur. L'invention ne portant pas sur la structure du démarreur, il n'est pas utile d'en détailler un mode de réalisation. Cet ensemble tournant 15 est relié d'un côté à une turbine à air non représentée. La turbine entraîne l'ensemble 15 au moment du démarrage du turboréacteur. Un joint de turbine 15a assure l'étanchéité entre l'ensemble tournant 15 et le carter 11. De l'autre côté l'ensemble tournant traversant la paroi 14 du carter, avec un moyen d'étanchéité 15b, est relié à un pignon 121 formant partie des engrenages de la boîte à engrenages 12. Comme cela l'a été décrit plus haut la boîte ou boîtier à engrenage 12 AGB est relié mécaniquement par des arbres de transmission appropriés à l'arbre moteur du turboréacteur. Lorsque le turboréacteur est à double ou triple arbres ou corps, il s'agit le plus souvent de l'arbre haute pression du moteur. Le boîtier est monté généralement sur le carter dit intermédiaire du turboréacteur et les arbres de transmission sont radiaux et traversent les flux gazeux dans un bras du carter intermédiaire. Le boîtier AGB est en soi bien connu il ne sera pas décrit plus en détail.

Une cavité interface 13 est ménagée entre le carter 11 du démarreur 10 et le boîtier 12 de l'AGB. Cette cavité est donc définie entre la paroi 14 du carter du démarreur et la paroi ou la pièce rapportée 122 entourant une extrémité du pignon 121. Il existe au moins une cavité 123 ménagée entre la paroi 122 et une paroi 124 toutes deux traversées par l'élément tournant que constitue le pignon 121. Des joints ou des étranglements 12a et 12b existent entre le pignon 121 et les parois 122 et 124.

Comme cela l'a été décrit plus haut, l'huile de lubrification de l'enceinte du démarreur est fournie depuis l'enceinte du boîtier AGB 12. Cette huile est rassemblée dans le fond du carter 11 d'où elle est distribuée par pompage ou autre moyen dans l'enceinte, et communique avec un réceptacle dans la zone interface 13 par un orifice 18 ou autre dans la paroi 14. L'huile se déverse dans la zone interface 13 par un déversoir d'où elle circule à travers le boîtier AGB. Une autre communication 18' existe également entre l'enceinte du démarreur et la zone interface 13.

Le système de l'invention applique les pressions d'une enceinte de palier 20. Dans un turboréacteur les arbres sont supportés dans la structure de stator par des paliers. Ces paliers sont lubrifiés et enfermés dans une double enceinte pressurisée pour orienter la circulation de l'huile vers une zone où elle est recueillie ; en outre l'air chargé d'huile est déshuilé de façon appropriée. De tels moyens sont connus en soi l'invention en tire profit pour pressuriser l'enceinte du démarreur et aussi pour récupérer l'huile de fuite.

Sur la figure on voit une enceinte 20 schématisée. L'arbre 30 du moteur est supporté par un système de palier 32 qui reçoit de l'huile par la buse 33. L'arbre et le palier sont enfermés dans une enceinte double 20, une enceinte intérieure 20int et une enceinte extérieure 20ext. L'enveloppe 22 de l'enceinte intérieure 22 est rendue étanche par rapport à l'arbre 30 par des joints d'étanchéité à labyrinthes 22a et 22b de part et d'autre du palier 32. L'enveloppe 21 de l'enceinte extérieure 20ext enveloppe l'enceinte intérieure 20int et est également étanche grâce à des joints d'étanchéité à labyrinthes 21a et 21b respectivement.

Pour éviter que l'huile de l'enceinte intérieure 20int ne fuît, on alimente l'enceinte extérieure 20ext en air de pressurisation à une pression P1 légèrement supérieure à celle P2 de l'enceinte intérieure 20int. Grâce à cela, il se crée une circulation d'air de l'enceinte 20ext vers l'enceinte 20int à travers les joints 22a et 22b. L'huile de lubrification est récupérée vers une zone de récupération d'huile 22c. L'air chargé d'huile de l'enceinte intérieure 20int est traité dans un déshuileur, non représenté, avant d'être éjecté au travers de l'arbre 30 par un canal d'aération 31 vers l'arrière du moteur.

L'invention met à profit cette source d'air à la pression P1 pour pressuriser l'enceinte du démarreur. Dans l'exemple de réalisation de la figure 2, un conduit 40 relie l'enceinte extérieure 20ext à l'enceinte du démarreur 10 ; ici le conduit débouche dans la cavité interface. En raison des communications existantes entre la cavité interface 13 et l'enceinte du démarreur, cette dernière est sensiblement à la pression P'1 de la cavité 13. La pression P'1 est déterminée par l'orifice calibré 41 dont est pourvu le conduit 40.

On prévoit un conduit de retour d'air 43 vers l'enceinte intérieure 20int de l'enceinte double 20. Le retour 43 est piqué sur une paroi 124 du boîtier AGB 12, à l'intérieur par rapport à la paroi 122 qui fait l'interface 13.

En fonctionnement sans incident l'enceinte du démarreur 10 est pressurisée par l'air provenant de l'enceinte extérieure 20ext indépendamment de l'enceinte du boîtier AGB 12 qui lui est alimenté en air de pressurisation également. Les pressions de pressurisations peuvent être égales. La pression régnant dans le démarreur peut être aussi supérieure à celle régnant dans le boîtier 12.

L'air passe de la cavité de l'interface entre les deux parois 121 et 124 puis est guidé vers l'enceinte intérieure 20int. Si une fuite survient dans l'enceinte du démarreur. La pression chute et l'air passe de la cavité interface 13 vers l'enceinte du démarreur. Cet air est moins chargé en brouillard d'huile que l'air de l'AGB. La fuite d'huile est ainsi plus faible que par rapport au cas où la pressurisation se ferait par l'enceinte de l'AGB 12. Cette solution permet aussi de récupérer l'huile qui est entraînée par le conduit 43 en profitant du déshuileur dont est équipé le système de lubrification des paliers d'arbres.

La source d'air de pressurisation peut être l'enceinte de pressurisation de l'un quelconque des paliers d'arbre. Plus généralement la pressurisation peut être assurée par toute source d'air ou même de gaz dans la mesure où elle peut assurer le niveau de pression souhaité.

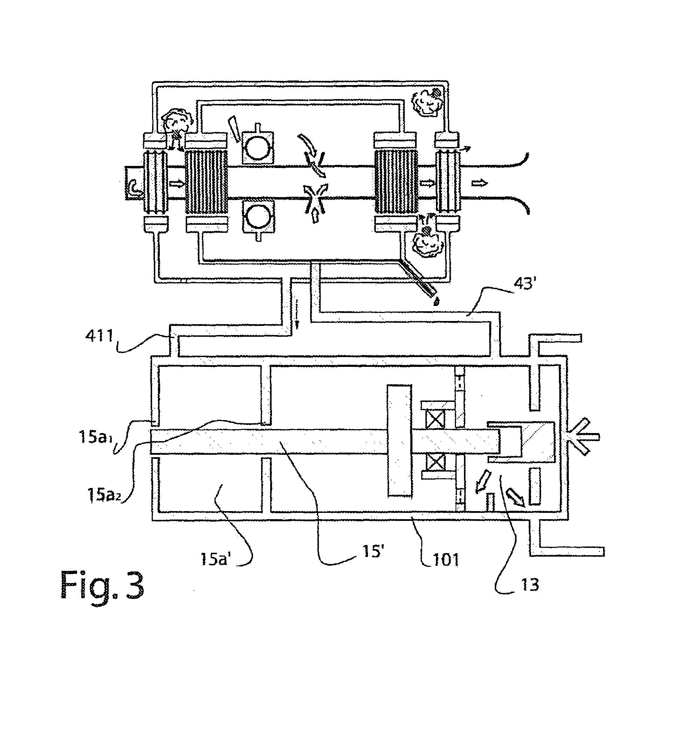

Sur la figure 3, on a représenté une variante de réalisation où l'air de pressurisation ne débouche pas dans la cavité formant l'interface entre le démarreur et le boîtier à engrenages mais dans une enceinte de pressurisation à la borne opposée de l'ensemble tournant.

Les références pointant les mêmes parties du démarreur portent les mêmes numéros primés. Le démarreur 10' comprend une enceinte double d'étanchéité 15a' entre deux joints d'étanchéité 15a1 et 15a2. Les deux joints sont agencés de façon que l'air pressurisé de l'enceinte 15a' fuît vers l'enceinte du démarreur 10'. Les joints sont de préférence un joint carbone pour le joint extérieur 15a1 et un joint à labyrinthe pour le joint intérieur 15a2. Cette enceinte 15a' est en communication avec l'enceinte extérieure 21 de l'enceinte double de pressurisation du palier par un conduit 41'. Le retour d'air vers l'enceinte intérieure 22 est assuré par un conduit 43' qui est relié à la cavité interface 13.

## Revendications

1. Moteur à turbine à gaz comprenant un boîtier à engrenages AGB (12) relié mécaniquement à un arbre du moteur pour l'entraînement de machines auxiliaires et un démarreur (10, 10') à air monté sur le boîtier, les enceintes du démarreur et du boîtier étant en communication de telle façon que l'huile de lubrification du démarreur soit distribuée depuis le boîtier AGB, **caractérisé par le fait que** l'enceinte à huile du démarreur (10, 10') est pressurisée par une source d'air, indépendante du boîtier AGB,

2. Moteur selon la revendication précédente dont l'air de pressurisation débouche dans une zone interface (13, 13') entre le carter (11, 11') du démarreur (10, 10') et celui du boîtier (12).

3. Moteur selon la revendication 1, un double joint d'étanchéité (15a') de l'ensemble tournant (15') du démarreur (10') étant ménagé du côté de la turbine à air, l'air de pressurisation débouche entre les deux joints d'étanchéité (15a1 15a2) formant le double joint (15a').

4. Moteur selon la revendication 2 ou 3 dont un retour (43, 43') d'air est ménagé entre le démarreur et le boîtier à une pression inférieure à la pression d'alimentation en air de pressurisation.

5. Moteur selon la revendication précédente dont l'air en retour est conduit vers un déshuileur.

6. Moteur selon l'une des revendications précédentes dont l'air de pressurisation est prélevé depuis une enceinte extérieure (20ext) de pressurisation de l'un des paliers du turboréacteur.

7. Moteur selon la revendication 5 comprenant un retour d'air vers l'enceinte intérieure (20int) d'un des paliers du turboréacteur.

## Claims

1. A gas turbine engine, comprising a gear housing AGB (12) mechanically connected with an engine shaft for driving auxiliary machines and an air starter (10, 10') mounted on the housing, the starter and housing enclosures being in communication such that the lubricating oil of the starter be distributed from the AGB housing, **characterized in that** the oil enclosure of the starter (10, 10') is pressurized by a source of air, being independent from the AGB housing.

2. An engine according to the previous claim, wherein the pressurization air flows into an interface area (13, 13') between the casing (11, 11') of the starter (10, 10') and that of the housing (12).

3. An engine according to claim 1, wherein, with a double seal (15a') of the rotary assembly (15') of the starter (10') being arranged on the side of the air turbine, the pressurization air flows between both seals (15a1, 15a2) forming the double seal (15a').

4. An engine according to claim 2 or 3, wherein an air return (43, 43') is arranged between the starter and the housing at a lower pressure than the pressurization air supply pressure.

5. An engine according to the previous claim, wherein the air return is fed towards a deoiler.

6. An engine according to any of previous claims, wherein the pressurization air is taken from an external pressurization enclosure (20ext) of one of the turbojet engine bearings.

7. An engine according to claim 5, comprising an air return towards the internal enclosure (20int) of one of the turbojet engine bearings.

## Patentansprüche

1. Ein Gasturbinenmotor mit einem Getriebegehäuse (AGB - auxiliary gear box) (12) das mechanisch mit einer Achse des Motors zum Antrieb der Hilfsmaschinen verbunden ist und eine mit Luft funktionierende Anlassvorrichtung (10, 10'), die auf dem Gehäuse montiert ist, wobei die Kammern der Anlassvorrichtung und des AGB-Getriebegehäuses so miteinander verbunden sind, dass das Schmieröl der Anlassvorrichtung vom AGB-Gehäuse aus verteilt wird, was sich **dadurch kennzeichnet, dass** die Ölkammer der Anlassvorrichtung (10, 10') durch eine Luftquelle unter Druck gesetzt wird, die unabhängig vom AGB-Getriebegehäuse ist.

2. Ein Motor gemäß der vorhergehenden Anspruch, bei welchem die Druckluft in einer Interface-Zone (13, 13') zwischen dem Kurbelgehäuse (11, 11') der Anlassvorrichtung (10, 10') und dem Kurbelgehäuse des AGB-Getriebegehäuses (12) herauskommt.

3. Ein Motor gemäß Anspruch 1, bei welchem eine doppelte dichtende Packung (15a') des sich drehenden Ganzen (15') der Anlassvorrichtung (10') auf der Seite der Luftturbine angebracht ist, und bei welchem die Druckluft zwischen zwei dichtenden Packungen (15a1, 15a2), die die doppelte Packung (15a') bilden, herauskommt.

4. Ein Motor gemäß den Ansprüche 2 oder 3, bei welchem eine Luft-Rückfuhr (43, 43') mit einem niedrigeren Druck als dem Speisedruck der Druckluft zwischen der Anlassvorrichtung und dem AGB-Getriebegehäuse angebracht ist.

5. Ein Motor gemäß der vorhergehenden Anspruch, bei welchem die zurückgeführte Luft zu einem Ölabscheider geleitet wird.

6. Ein Motor gemäß einer der vorhergehenden Ansprüche, bei welchem die Druckluft von einer externen Druckkammer (20ext) eines der Lager der Strahlturbine aufgenommen wird.

7. Ein Motor gemäß Anspruch 5, der eine Luft-Rückfuhr zur internen Kammer (20int) eines der Lager der Strahlturbine umfasst.
